# EUROPÄISCHE PATENTSCHRIFT

(11) **EP 3 047 165 B1**
(45) Veröffentlichungstag und Bekanntmachung des Hinweises auf die Patenterteilung: **12.06.2019**
(21) Anmeldenummer: 14752829.3
(22) Anmeldetag: 14.08.2014
(51) Int. Cl.: F16B 43/00, F16B 21/07, F16B 5/06, F16B 21/18

(54) **BEFESTIGUNGSKRALLE**
FASTENING CLAW
GRIFFE DE FIXATION

(30) Priorität: 18.09.2013 DE 102013218650
(43) Veröffentlichungstag der Anmeldung: 27.07.2016
(73) Patentinhaber: Bayerische Motoren Werke Aktiengesellschaft, 80809 München (DE)
(72) Erfinder: KORBER, Franz, 84066 Mallersdorf (DE)
(86) Internationale Anmeldenummer: PCT/EP2014/067379
(87) Internationale Veröffentlichungsnummer: WO 2015/039819

(56) Entgegenhaltungen:
- EP-A1- 0 886 074
- EP-A2- 1 101 957
- WO-A1-95/20108
- DE-A1- 19 615 130
- DE-A1-102010 030 964
- DE-B3-102012 206 938
- GB-A- 566 446
- GB-A- 1 036 103
- US-A- 4 390 210
- US-A- 5 707 193
- US-A1- 2011 258 820
- US-A1- 2013 031 756

## Beschreibung

Die vorliegende Erfindung betrifft eine Bauteilverbindung gemäß dem Oberbegriff des Patentanspruches 1.

Eine derartige Bauteilverbindung ist aus der DE 10 2010 030 964 A1 bekannt. Zum technischen Hintergrund der Erfindung zählen:
- EP 886 074 A1,
- GB 566 446 A,
- US 2013 031 756 A1,
- GB 1 036 103 A,
- EP 1 101 957 A2,
- US 5 707 193 A,
- US 4 390 210 A,
- WO 95 201 08 A1,
- US 2011 258 820 A1,
- DE 196 15 130 A1.

Im Fahrzeugbau aber auch in anderen Technologiebereichen besteht ein Trend zu konstruktiv möglichst einfachen und fertigungstechnisch möglichst einfach herzustellenden Verbindungstechnologien. In diesem Zusammenhang sei ferner auf die DE 10 2008 038 747 A1, DE 10 2009 049 602 B3, DE 10 2010 028 322 A1, DE 10 2010 028 323 A1, DE 10 2010 030 964 A1, WO 2012 031 652 A1, DE 10 2010 041 356 A1, DE 10 2010 042 803 A1, DE 10 2010 063 717 A1, DE 10 2011 080 317 A1 oder die DE 10 2012 206 938 B3 verwiesen.

Aufgabe der Erfindung ist es, eine Bauteilverbindung zu schaffen, die mit einem konstruktiv einfachen und kostengünstigen Befestigungselement geschaffen werden kann und die in einfacher Weise und mit geringen Montagekräften hergestellt werden kann und die eine hohe Festigkeit aufweist.

Diese Aufgabe wird durch die Merkmale des Patentanspruches 1 gelöst.

Ausgangspunkt der Erfindung ist ein "krallenartiges Befestigungselement" (im Folgenden auch "Befestigungskralle" genannt), das einen Kreisringabschnitt aufweist, von dessen radialer Innenseite mindestens zwei, vorzugsweise drei, vier oder mehr biegeelastische, zungenartige Elemente schräg nach innen oben in Richtung einer Oberseite der Befestigungskralle hin abstehen.

Die zungenartigen Elemente weisen freie Enden auf. Die freien Enden der zungenartigen Elemente beranden bzw. definieren einen mittleren, offenen Bereich der Befestigungskralle. Von einer Unterseite der Befestigungskralle her kann ein Fixierelement, eingeführt und zwischen die freien Enden der zungenartigen Elemente eingeklemmt werden. Bei dem Fixierelement kann es sich um ein Fixierelement handeln, das einen kugelförmigen oder kugelähnlichen Kopf aufweist. Prinzipiell sind aber auch andersartig gestaltete Fixierelemente denkbar, die in den mittleren, offenen Bereich der Befestigungskralle einführbar sind.

Die bereits erwähnten zungenartigen Elemente sind voneinander durch Schlitze getrennt, die sich von einem kreisringabschnittnahen Bereich im Wesentlichen radial nach innen erstrecken. Es kann vorgesehen sein, dass radial äußere Enden der zwischen den zungenartigen Elementen vorgesehenen Schlitze ausgerundet sind.

Ferner kann vorgesehen sein, dass die zungenartigen Elemente sich zu ihren freien Enden hin verjüngen. Die freien Enden der zungenartigen Elemente können z.B. konvex gerundet gestaltet sein. Alternativ dazu können die freien Enden der zungenartigen Elemente auch gerade ausgebildet sein, derart, dass sie sich "tangential" in Bezug auf den mittleren, offenen Bereich der Befestigungskralle erstrecken. Alternativ dazu kann vorgesehen sein, dass die freien Enden der zungenartigen Elemente konkav ausgebildet sind. Eine konkave Gestaltung der freien Enden der zungenartigen Elemente hat den Vorteil, dass sie sich, sofern das zwischen ihnen eingeklemmte Fixierelement rund gestaltet ist, an dessen Außenkontur anschmiegen können.

Nach einer Weiterbildung der Erfindung stehen die zungenartigen Elemente schräg von dem Kreisringabschnitt ab. "Schräg" bedeutet, dass die zungenartigen Elemente jeweils einen bestimmten Winkel mit der durch den Kreisringabschnitt gebildeten Ebene einschließen. Versuche haben gezeigt, dass es von Vorteil ist, wenn dieser Winkel in einem Bereich zwischen 10° und 40° liegt. Besonders günstig sind Winkel, die in einem Bereich zwischen 20° und 30° liegen. Bei einem konkreten Ausführungsbeispiel kann bspw. vorgesehen sein, dass der Winkel, den die zungenartigen Elemente mit dem Kreisringabschnitt einschließen, bei 28° oder mehr liegt.

Nach einer Weiterbildung der Erfindung sind die zungenartigen Elemente gleichmäßig in Umfangsrichtung des Kreisabschnitts verteilt angeordnet. Sie können insbesondere identisch gestaltet sein. Wie bereits erwähnt, sind mindestens zwei zungenartige Elemente vorgesehen. Unter Festigkeitsgesichtspunkten ist es günstig, wenn genau drei oder genau vier zungenartige Elemente vorgesehen sind. Prinzipiell könnten aber auch fünf oder mehr derartige zungenartige Elemente vorgesehen sein.

Die Befestigungskralle kann aus Metall, insbesondere aus einem Metallblech hergestellt sein. Sie kann bspw. aus einem Stahlblech ausgestanzt sein, wobei nach dem Ausstanzen die zungenartigen Elemente wie oben beschrieben aufgebogen werden.

Nach einer Weiterbildung der Erfindung stehen von dem Kreisringabschnitt radial nach außen mehrere in Umfangsrichtung des Kreisringabschnitts verteilt angeordnete "Schirmringabschnitte" ab. Zwei in Umfangsrichtung aufeinander folgende Schirmringabschnitte sind dabei jeweils durch einen sich in radialer Richtung erstreckenden Schirmringschlitz voneinander getrennt. Durch die Schirmringabschnitte wird der Befestigungskralle eine zusätzliche Elastizität verliehen. Die Schirmringabschnitte haben eine ähnliche Funktion wie Blattfedern oder Tellerfedern, d.h. sie drücken im montierten Zustand der Befestigungskralle gegen ein Bauteil.

Radial innere Enden der Schirmringschlitze können ausgerundet sein.

Nach einer Weiterbildung der Erfindung ist vorgesehen, dass die Schirmringschlitze in Umfangsrichtung versetzt in Bezug auf die zwischen den zungenartigen Elementen vorgesehenen Schlitze sind.

Vorzugsweise stehen die Schirmringabschnitte schräg nach unten von dem Kreisringabschnitt ab, wodurch sich eine "hutartige Form" der Befestigungskralle ergibt.

Es kann vorgesehen sein, dass die Anzahl der Schirmringabschnitte gleich oder größer der Anzahl der zungenartigen Elemente ist.

Sofern die Befestigungskralle aus Stahl hergestellt ist, ist es von Vorteil, wenn sie einsatzgehärtet ist. Ferner kann vorgesehen sein, dass die Befestigungskralle mit einem Beschichtungsmaterial, z.B. mit einer Korrosionsschutzbeschichtung und/oder mit einer elektrisch isolierenden Beschichtung überzogen ist.

Alternativ zu Metall kann die Befestigungskralle z.B. auch aus Kunststoff hergestellt sein. Wesentlich ist, dass die Befestigungskralle eine gewisse Mindestelastizität aufweist.

Nach einer Weiterbildung der Erfindung ist vorgesehen, dass die Befestigungskralle ein eigenständiges Verbindungselement und nicht integraler Bestandteil einer anderen Komponente oder eines anderen Bauteils ist. Letzteres ist aber keinesfalls ausgeschlossen. Die Befestigungskralle selbst kann selbstverständlich auch integraler Bestandteil einer anderen Komponente oder eines anderen Bauteils sein oder mit einer anderen Komponente oder mit einem anderen Bauteil verbunden sein.

Ein weiterer wesentlicher Aspekt der Erfindung ist eine Bauteilverbindung mit einer Befestigungskralle, wie sie oben beschrieben worden ist. Eine derartige Bauteilverbindung weist ein (erstes) Bauteil mit einem männlichen Fixierelement auf, das von dem ersten Bauteil absteht. Das männliche Fixierelement kann in einen ersten Abschnitt und in einen zweiten, mit dem ersten Abschnitt verbundenen bzw. sich an den ersten Abschnitt anschließenden zweiten Abschnitt untergliedert werden. Über den ersten Abschnitt ist das männliche Fixierelement unmittelbar mit dem ersten Bauteil verbunden. Das männliche Fixierelement kann über den ersten Abschnitt z.B. einstückig mit dem ersten Bauteil verbunden sein oder an das erste Bauteil angeschweißt oder in anderer Weise mit dem ersten Bauteil verbunden sein. Der sich an den ersten Abschnitt anschließende zweite Abschnitt hat erfindungsgemäß die Form einer Kugel oder eine kugelähnliche Form.

Der erste Abschnitt hat ebenfalls die Form einer Kugel oder eine kugelähnliche Form. In diesem Fall ist das männliche Fixierelement durch zwei miteinander verbundene, z.B. miteinander verschweißte, Kugeln oder kugelige Elemente gebildet (so genannte "Doppelkugel").

Der zweite kugelige oder kugelförmige Abschnitt steht vorzugsweise kopfartig von dem ersten Abschnitt ab.

Auf das männliche Fixierelement, insbesondere auf dessen kugeligen oder kugelähnlichen zweiten Abschnitt ist die Befestigungskralle aufgeclipst und zwar derart, dass die freien Enden der zungenartigen Elemente in einem Bereich zwischen einer Oberseite des ersten Bauteils und einer Äquatorebene des kugeligen oder kugelähnlichen Abschnitts schräg von unten her an dem kugeligen oder kugelähnlichen Abschnitt anliegen. Aufgrund dieser Anlageposition unterhalb der Äquatorebene ergibt sich ein Formschluss bzw. ein Hinterschnitt, was dazu führt, dass die Befestigungskralle im Prinzip nur durch Zerstören der Befestigungskralle von dem männlichen Fixierelement abgezogen werden kann oder mittels eines geeignet gestalteten Spezialwerkzeugs.

Nach einer Weiterbildung der Erfindung ist vorgesehen, dass die Bauteilverbindung ein zweites Bauteil aufweist, welches wiederum ein Durchgangsloch aufweist, durch - das sich das männliche Fixierelement hindurch erstreckt.

Es kann vorgesehen sein, dass zumindest der Kreisringabschnitt und/oder die Schirmringabschnitte in einem durchgangslochnahen Bereich des zweiten Bauteils (federartig) an einer dem ersten Bauteil abgewandten zweiten abgewandten Seite des zweiten Bauteils an dem zweiten Bauteil anliegt bzw. anliegen. Der Kreisringabschnitt und/oder die Schirmringabschnitte widersetzen sich somit einem Abziehen des zweiten Bauteils von dem ersten Bauteil. Aufgrund der Form der Befestigungskralle wird eine auf das zweite Bauteil wirkende Abziehkraft in Kräfte umgesetzt, die in Längsrichtung der zungenartigen Elemente wirken und die an den freien Enden der zungenartigen Elemente von dem zweiten, kugeligen oder kugelähnlichen Abschnitt des männlichen Fixierelements abgestützt werden. Dadurch ergibt sich eine der Abziehkraft entgegenwirkende Selbsthemmung.

Die erfindungsgemäße Bauteilverbindung kann in einer Vielzahl von Technologiegebieten eingesetzt werden. Vielfältige Anwendungen sind z.B. im Fahrzeugbau, insbesondere im Fahrzeugkarosseriebau denkbar. Dementsprechend kann es sich bei dem ersten und/oder dem zweiten Bauteil z.B. um ein erstes bzw. zweites Fahrzeugkarosserieteil handeln.

Im Folgenden wird die Erfindung im Zusammenhang mit der Zeichnung näher erläutert. Es zeigen:
- Fig. 1: das Grundprinzip der Erfindung in schematischer Darstellung;
- Fig. 2: die Bedeutung des Schrägstellungswinkels der zungenartigen Elemente;
- Fig. 3: ein zweites Bauteil mit einem Durchgangsloch, durch welches eine Doppelkugel ragt;
- Fig. 4: das Ausführungsbeispiel der Fig. 3 mit aufgeclipster Befestigungskralle;
- Fig. 5: eine vergrößerte Darstellung einer Bauteilverbindung gemäß der Erfindung;
- Fig. 6: ein alternatives Ausführungsbeispiel einer Befestigungskralle mit zwei Federelementen;
- Fig. 7: eine Befestigungskralle mit vier Federelementen;
- Fig. 8: eine alternativgestaltete Befestigungskralle mit vier Federelementen;
- Fig. 9: eine weitere Alternative einer Befestigungskralle mit vier Federelementen;
- Fig. 10: eine Befestigungskralle mit zusätzlichen Schirmringabschnitten;
- Fig. 11: eine Variante des Ausführungsbeispiels der Fig. 11; und
- Fig. 12: eine weitere Variante einer Befestigungskralle.

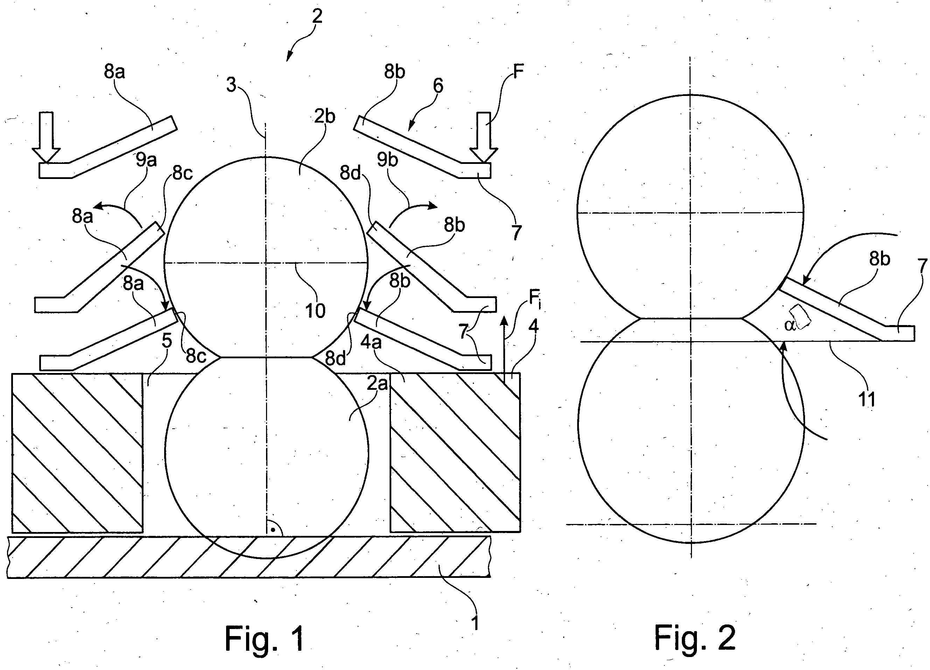

Fig. 1 zeigt eine schematische Darstellung des Grundprinzips der Erfindung. Auf ein erstes Bauteil 1, bei dem es sich bspw. um ein (Stahl-)blech (z.B. ein Karosserieteil einer Fahrzeugkarosserie) handeln kann, ist ein "männliches Fixierelement" 2 aufgeschweißt. Das männliche Fixierelement 2 ist hier durch zwei miteinander verschweißte Kugeln 2a, 2b gebildet. Die Kugel 2a ist auf die Oberseite des Bauteils 1 aufgeschweißt. Eine durch die beiden Mittelpunkte der Kugeln 2a, 2b verlaufende Gerade 3 steht senkrecht auf dem Bauteil 1 im Aufstandspunkt der Kugel 2a.

Auf das erste Bauteil 1 ist ein zweites Bauteil 4 aufgesetzt. Das zweite Bauteil 4 weist ein Durchgangsloch 5 auf, dessen Durchmesser größer als der Durchmesser der beiden Kugeln 2a, 2b des männlichen Fixierelements 2 ist. Das männliche Fixierelement 2 ragt durch das Durchgangsloch 5 hindurch, wobei sich die Kugel 2b vollständig auf der dem Bauteil 1 abgewandten Oberseite 4a des zweiten Bauteils 4 befindet.

Die beiden Bauteile 1, 4 werden mittels des männlichen Fixierelements, das hier als "Doppelkugel" ausgebildet ist, und einer Befestigungskralle 6 zusammengeklemmt. Die in Fig. 1 nur schematisch dargestellte Befestigungskralle weist einen im Wesentlichen ebenen Kreisringabschnitt 7 sowie zwei biegeelastische, zungenartige Elemente 8a, 8b auf.

In Fig. 1 ist die Befestigungskralle 6 in drei verschiedenen Stellungen dargestellt, nämlich - beginnend von oben - in einer Ausgangsstellung, in einer Mittelstellung und in einer gefügten Stellung.

Ausgehend von der Ausgangsstellung wird die Befestigungskralle 6 mit einer Kraft F auf die Kugel 2b gedrückt, was dazu führt, dass die zungenartigen Elemente 8a, 8b elastisch nach oben biegen, was durch Pfeile 9a, 9b dargestellt ist. Freie Enden 8c, 8d der zungenartigen Elemente 8a, 8b gleiten am Außenumfang der Kugel 2b über deren Äquatorebene 10 nach unten.

Wenn die Befestigungskralle 6 mit ihrem Kreisringabschnitt 7 auf der Oberseite 4a des zweiten Bauteils 4 aufliegt, stehen die zungenartigen Elemente 8a, 8b schräg nach oben von dem Kreisringabschnitt 7 ab, wobei die freien Enden 8c, 8d der zungenartigen Elemente 8a, 8b schräg von unten her in einem Bereich zwischen der Oberseite 4a des zweiten Bauteils 4 und der Äquatorebene 10 der Kugel 2b am Außenumfang der Kugel 2b anliegen. Dadurch ergibt sich ein Formschluss.

Ein Abziehen des zweiten Bauteils 4 von dem ersten Bauteil ein wird, was durch die Kraft F₁ angedeutet ist, durch die Befestigungskralle 6 blockiert. Die Abziehkraft F₁ überträgt sich über den Kreisringabschnitt 7 auf die Befestigungskralle und wird über die zungenartigen Elemente 8a, 8b in Längsrichtung der zungenartigen Elemente 8a, 8b bzw. über deren freie Enden 8c, 8d in die Kugel 2b des männlichen Fixierelements 2 eingeleitet und von dieser abgestützt. Da die zungenartigen Elemente 8a, 8b selbsttätig nicht nach oben biegen, wird ein Abziehen des zweiten Bauteils 4 von dem ersten Bauteil 1 verhindert.

Versuche haben gezeigt, dass es günstig ist, wenn, wie in Fig. 2 dargestellt, der Winkel α zwischen der durch den Kreisringabschnitt 7 gebildeten Ebene 11 und den zungenartigen Elementen (in Fig. 2 ist lediglich das zungenartige Element 8b dargestellt), in einem Bereich zwischen 10° und 40°, vorzugsweise in einem Bereich zwischen 20° und 30° liegt. Bei dem in Fig. 2 gezeigten Ausführungsbeispiel beträgt der Winkel α ca. 25°.

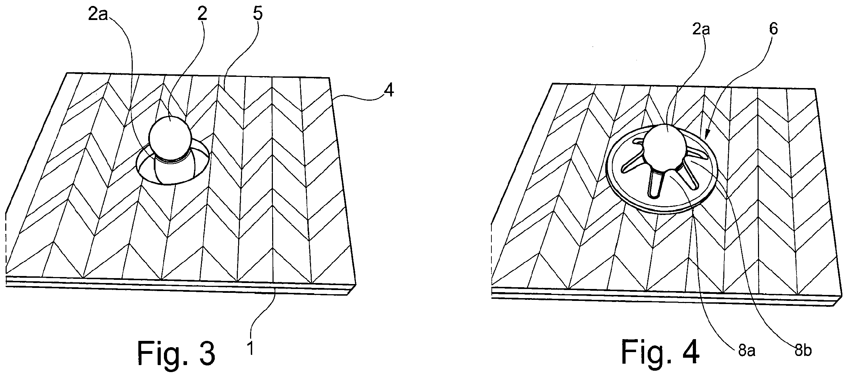

Fig. 3 zeigt einen Teil der erfindungsgemäßen Anordnung, wobei ein Bauteil 4, welches ein Loch 5 aufweist, so auf ein Bauteil 1 aufgesetzt ist, dass eine von dem Bauteil 1 abstehende "Doppelkugel" (entspricht dem männlichen Fixierelement 2) mit ihrer oberen Kugel 2a durch das Loch 5 hindurch ragt.

Fig. 4 zeigt die "fertige" Bauteilverbindung, wobei auf die Kugel 2a eine Befestigungskralle 6 aufgeclipst ist, die mehrere in Umfangsrichtung verteilt angeordnete zungenartige Elemente 8a, 8b aufweist.

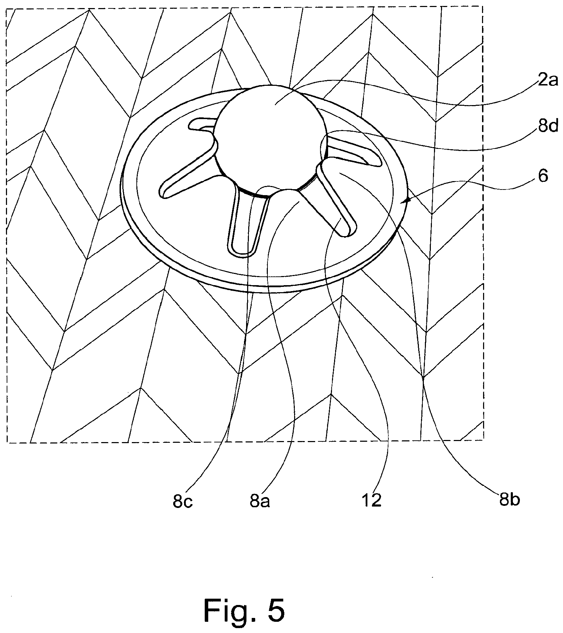

Fig. 5 zeigt eine vergrößerte Darstellung einer solchen Bauteilverbindung. Deutlich zu erkennen ist, dass die zungenartigen Elemente 8a, 8b sich zu ihren freien Enden 8c, 8d hin verjüngen. Die einzelnen zungenartigen Elemente 8a, 8b sind jeweils durch sich radial nach innen erstreckende Schlitze 12 voneinander getrennt. Wie aus Fig. 5 ersichtlich ist, sind radial äußere Enden der zwischen den zungenartigen Elementen 8a, 8b vorgesehenen Schlitze 12 ausgerundet.

Bei dem in Fig. 5 gezeigten Ausführungsbeispiel sind die freien Enden 8c, 8d der zungenartigen Elemente 8a, 8b im Wesentlichen gerade ausgebildet, d.h. sie liegen tangential an der Kugel 2a an. Alternativ dazu könnten die freien Enden auch konvex gerundet oder konkav gerundet ausgebildet sein. Konkav gerundete freie Enden haben den Vorteil, dass sie sich eng anliegend an den Außenumfang der Kugel 2a anschmiegen würden.

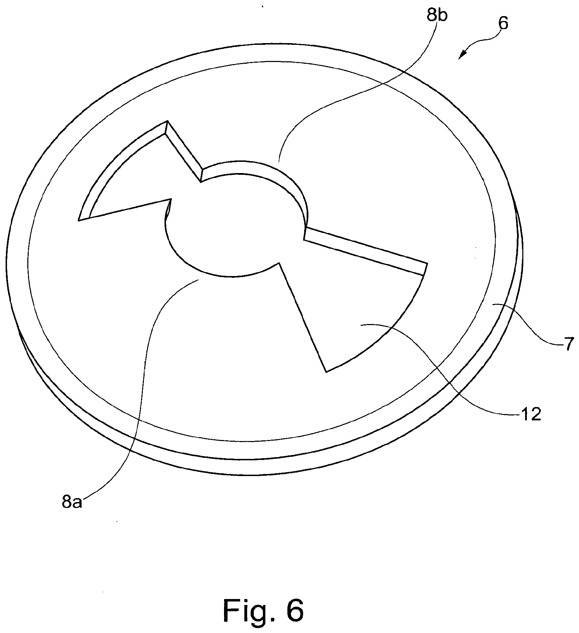

Fig. 6 zeigt ein Ausführungsbeispiel einer Befestigungskralle, die lediglich zwei zungenartige Elemente 8a, 8b aufweist, deren freie Enden konkav gerundet sind. Die Schlitze 12, welche die beiden zungenartigen Elemente 8a, 8b voneinander trennen, sind hier trapezartig gestaltet.

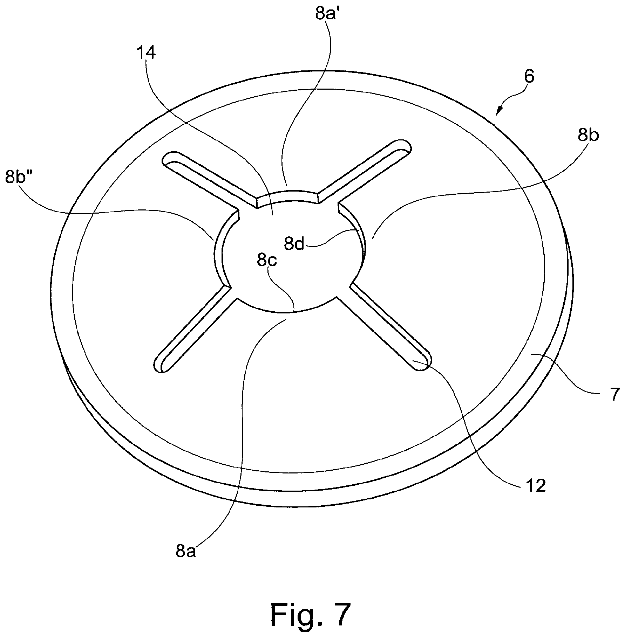

Fig. 7 zeigt ein Ausführungsbeispiel einer Befestigungskralle 6, die vier zungenartige Elemente 8a, 8b, 8a', 8b' aufweist. Zwei in Umfangsrichtung aufeinander folgende zungenartige Elemente 8a, 8b sind jeweils durch einen schmalen, sich in radialer Richtung erstreckenden, in seinem Grund ausgerundeten Schlitz 12 voneinander getrennt. Auch bei diesem Ausführungsbeispiel sind die freien Enden 8c, 8d der zungenartigen Elemente 8a, 8b konkav ausgerundet.

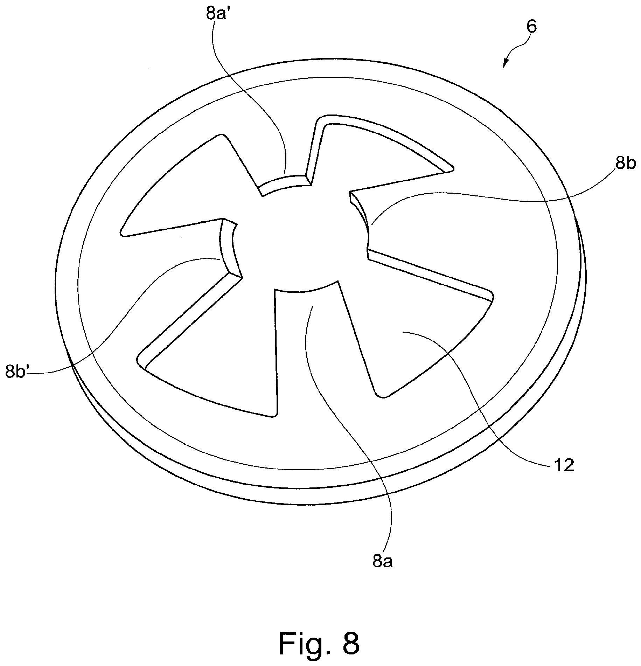

Fig. 8 zeigt ein Ausführungsbeispiel einer Befestigungskralle 6, bei dem ebenfalls vier zungenartige Elemente 8a, 8b, 8a', 8b' vorgesehen sind. Im Unterschied zum Ausführungsbeispiel der Fig. 7 sind hier die Schlitze 12 ähnlich wie beim Ausführungsbeispiel der Fig. 6 trapezartig gestaltet.

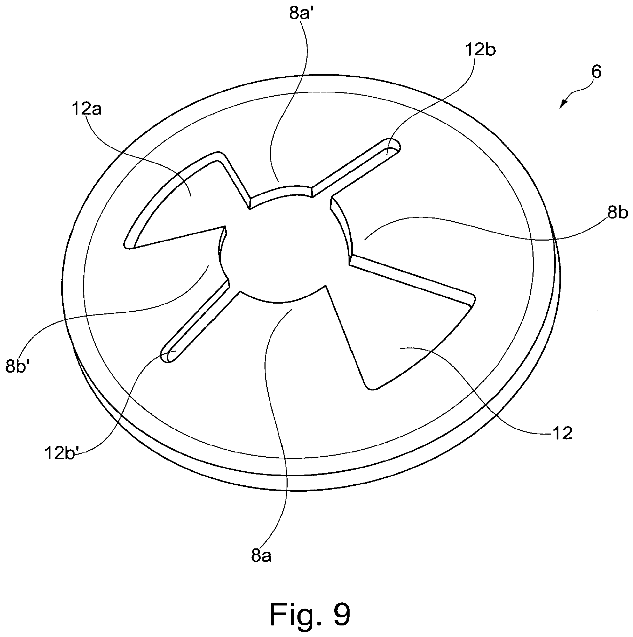

Fig. 9 zeigt ein Ausführungsbeispiel einer Befestigungskralle 6, bei dem vier zungenartige Elemente 8a, 8b, 8a', 8b' vorgesehen sind. Der die beiden zungenartigen Elemente 8a, 8b trennende Schlitz 12 sowie der gegenüberliegende Schlitz 12a ist trapezartig gestaltet, wohingegen die beiden anderen Schlitze 12b, 12b' als relativ schmale, in Radialrichtung verlaufende gerade Schlitze ausgebildet sind.

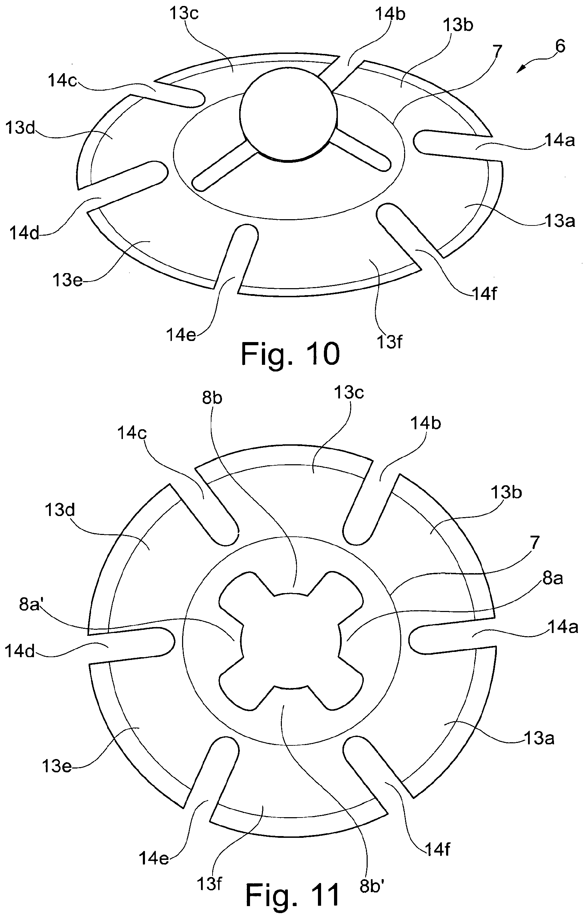

Fig. 10 zeigt ein Ausführungsbeispiel einer Befestigungskralle 6, die mehrere in Umfangsrichtung des Kreisringabschnitts 7 und von diesem radial schräg nach außen abstehende Schirmringabschnitte 13a, 13b, 13c, 13d, 13e, 13f aufweist, wobei in Umfangsrichtung aufeinander folgende Schirmringabschnitte jeweils durch einen sich im Wesentlichen in Radialrichtung erstreckenden Schirmringschlitz 14a-14f voneinander getrennt sind. Wie bereits angedeutet, kann vorgesehen sein, dass die Schirmringabschnitte 13a-13f nicht in derselben Ebene wie der Kreisringabschnitt 7 liegen, sondern schräg nach unten von diesem abstehen. Die Schirmringabschnitte und die zungenartigen Elemente bzw. die gesamte Befestigungskralle 6 weist eine gewisse Biegeelastizität auf.

Fig. 11 zeigt ein ähnliches Ausführungsbeispiel, bei dem ebenfalls vom Kreisringabschnitt 7 radial nach außen Schirmringabschnitte 13a-13f abstehen. Insgesamt sind sechs Schirmringabschnitte 13a-13f vorgesehen, wohingegen nur vier zungenartige Elemente 8a, 8b, 8a', 8b' vorgesehen sind.

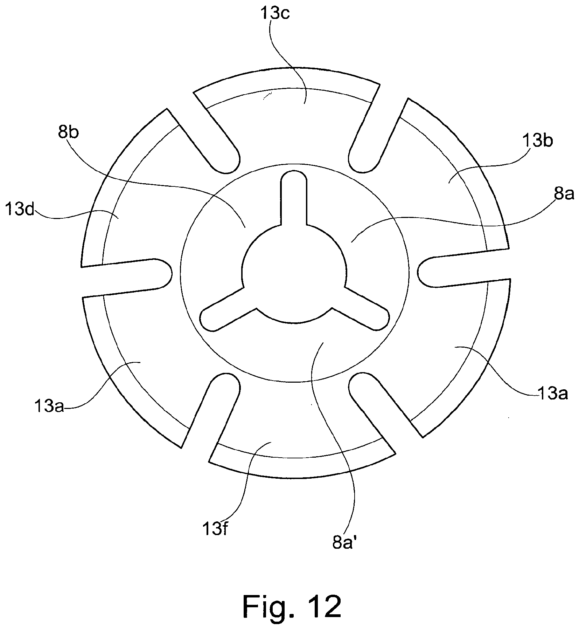

Fig. 12 zeigt ein Ausführungsbeispiel, bei dem sechs schirmringartige Elemente 13a-13f aber lediglich drei zungenartige Elemente 8a, 8b, 8a' vorgesehen sind.

Vollständigkeitshalber sei noch erwähnt, dass die freien Enden 8c, 8d (vgl. z.B. Fig. 7) einen mittleren, offenen Bereich 14 der Befestigungskralle 6 beranden bzw. definieren, indem von einer Unterseite der Befestigungskralle 6 her das z.B. in Fig. 5 gezeigte männliche Fixierelement 2 mit seiner Kugel 2a eingeführt und zwischen die freien Enden der zungenartigen Elemente 8a, 8b, 8a', 8b' einklemmbar ist.

## Patentansprüche

1. Bauteilverbindung, mit
• einem ersten Bauteil (1),
• einem männlichen Fixierelement (2), das von dem ersten Bauteil (1) absteht,
• einer Befestigungskralle (6), die auf das männliche Fixierelement (2) aufgeclipst ist, wobei die Befestigungskralle (6) einen Kreisringabschnitt (7) aufweist, der eine radiale Innenseite aufweist, von der mindestens zwei biegeelastische zungenartige Elemente (8a, 8b, 8a', 8b') schräg nach innen oben in Richtung einer Oberseite der Befestigungskralle (6) abstehen, wobei die zungenartigen Elemente (8a, 8b, 8a', 8b') freie Enden (8c, 8d) aufweisen, die einen mittleren, offenen Bereich (14) der Befestigungskralle (6) definieren, in den von einer Unterseite der Befestigungskralle (6) her das Fixierelement (2) eingeführt und zwischen die freien Enden (8c, 8d) der zungenartigen Elemente (8a, 8b, 8a', 8b') eingeklemmt ist,
**dadurch gekennzeichnet, dass**
• das männliche Fixierelement (2) einen ersten, unmittelbar mit dem ersten Bauteil (1) verbundenen kugeligen oder kugelähnlichen Abschnitt (2a) und einen sich an den ersten Abschnitt (2a) anschließenden, zweiten, kugeligen oder kugelähnlichen Abschnitt (2b) aufweist, wobei
• die freien Enden (8c, 8d) der zungenartigen Elemente (8a, 8b, 8a, 8b') in einem Bereich zwischen einer Oberseite des ersten Bauteils (1) und einer Äquatorebene (10) des zweiten Abschnitts (2b) schräg von unten außen her an dem zweiten Abschnitt (2b) anliegen.

2. Bauteilverbindung nach Anspruch 1, **dadurch gekennzeichnet, dass** die zungenartigen Elemente (8a, 8b, 8a', 8b') durch sich von dem Kreisringabschnitt (7) im Wesentlichen radial nach innen erstreckende Schlitze (12) voneinander getrennt sind.

3. Bauteilverbindung nach Anspruch 2, **dadurch gekennzeichnet, dass** radial äußere Enden der zwischen den zungenartigen Elementen (8a, 8b, 8a', 8b') vorgesehenen Schlitze (12) ausgerundet sind.

4. Bauteilverbindung nach einem der Ansprüche 1 bis 3, **dadurch gekennzeichnet, dass** sich die zungenartigen Elemente (8a, 8b, 8a', 8b') zu ihren freien Enden (8c, 8d) hin verjüngen.

5. Bauteilverbindung nach Anspruch 4, **dadurch gekennzeichnet, dass** die freien Enden (8c, 8d) gerundet sind.

6. Bauteilverbindung nach Anspruch 4, **dadurch gekennzeichnet, dass** die freien Enden (8c, 8d) gerade ausgebildet sind und sich tangential in Bezug auf den mittleren, offenen Bereich (14) der Befestigungskralle (6) erstrecken.

7. Bauteilverbindung nach Anspruch 4, **dadurch gekennzeichnet, dass** die freien Enden (8c, 8d) konkav ausgebildet sind, so dass sie sich an ein rund gestaltetes Fixierelement (2) anschmiegen können.

8. Bauteilverbindung nach einem der Ansprüche 1 bis 7, **dadurch gekennzeichnet, dass** die zungenartigen Elemente (8a, 8b, 8a', 8b') in einem Winkel (α) von einer durch den Kreisringabschnitt (7) gebildeten Ebene (11) abstehen, der in einem Bereich zwischen 10° und 40° liegt.

9. Bauteilverbindung nach Anspruch 8, **dadurch gekennzeichnet, dass** der Winkel (α) in einem Bereich zwischen 20° und 30° liegt.

10. Bauteilverbindung nach einem der Ansprüche 8 oder 9, **dadurch gekennzeichnet, dass** der Winkel (α) größer als 28° ist.

11. Bauteilverbindung nach einem der Ansprüche 1 bis 10, **dadurch gekennzeichnet, dass** die zungenartigen Elemente (8a, 8b, 8a', 8b') in Umfangsrichtung des Kreisringabschnitts (7) gleichmäßig verteilt angeordnet sind.

12. Bauteilverbindung nach einem der Ansprüche 1 bis 11, **dadurch gekennzeichnet, dass** die zungenartigen Elemente (8a, 8b, 8a', 8b') identisch gestaltet sind.

13. Bauteilverbindung nach einem der Ansprüche 1 bis 12, **dadurch gekennzeichnet, dass** genau zwei zungenartige Elemente (8a, 8b) vorgesehen sind.

14. Bauteilverbindung nach einem der Ansprüche 1 bis 12, **dadurch gekennzeichnet, dass** genau drei zungenartige Elemente (8a, 8b, 8a') vorgesehen sind.

15. Bauteilverbindung nach einem der Ansprüche 1 bis 12, **dadurch gekennzeichnet, dass** genau vier zungenartige Elemente (8a, 8b, 8a', 8b') vorgesehen sind.

16. Bauteilverbindung nach einem der Ansprüche 1 bis 15, **dadurch gekennzeichnet, dass** die Befestigungskralle aus Metall, insbesondere aus Stahl, hergestellt ist.

17. Bauteilverbindung nach einem der Ansprüche 1 bis 16, **dadurch gekennzeichnet, dass** der Kreisringabschnitt (7) eben ist.

18. Bauteilverbindung nach einem der Ansprüche 1 bis 17, **dadurch gekennzeichnet, dass** von dem Kreisringabschnitt (7) radial nach außen mehrere in Umfangsrichtung des Kreisringabschnitts (7) verteilt angeordnete Schirmringabschnitte (13a-13f) abstehen.

19. Bauteilverbindung nach Anspruch 18, **dadurch gekennzeichnet, dass** zwei in Umfangsrichtung aufeinanderfolgende Schirmringabschnitte (13a-13f) jeweils durch einen sich in Radialrichtung erstreckenden Schirmringschlitz (14a-14f) voneinander getrennt sind.

20. Bauteilverbindung nach einem der Ansprüche 18 oder 19, **dadurch gekennzeichnet, dass** radial innere Enden der Schirmringschlitze (14a-14f) ausgerundet sind.

21. Bauteilverbindung nach einem der Ansprüche 19 oder 20, **dadurch gekennzeichnet, dass** die Schirmringschlitze (14a-14f) in Umfangsrichtung versetzt in Bezug auf die zwischen den zungenartigen Elementen (8a, 8b, 8a', 8b') vorgesehenen Schlitze (12) sind.

22. Bauteilverbindung nach einem der Ansprüche 18 bis 21, **dadurch gekennzeichnet, dass** die Schirmringabschnitte (13a-13f) schräg nach unten von dem Kreisringabschnitt (7) abstehen.

23. Bauteilverbindung nach einem der Ansprüche 18 bis 22, **dadurch gekennzeichnet, dass** die Anzahl der Schirmringabschnitte (13a-13f) gleich oder größer der Anzahl der zungenartigen Elemente (8a, 8b, 8a', 8b') ist.

24. Bauteilverbindung nach einem der Ansprüche 1 bis 23, **dadurch gekennzeichnet, dass** die Befestigungskralle (6) aus einem Metallblech ausgestanzt ist, wobei die zungenartigen Elemente (8a, 8b, 8a', 8b') aufgebogen wurden.

25. Bauteilverbindung nach einem der Ansprüche 1 bis 24, **dadurch gekennzeichnet, dass** die Befestigungskralle (6) einsatzgehärtet ist.

26. Bauteilverbindung nach einem der Ansprüche 1 bis 25, **dadurch gekennzeichnet, dass** die Befestigungskralle mit einem Beschichtungsmaterial überzogen ist.

27. Bauteilverbindung nach einem der Ansprüche 1 bis 26, **dadurch gekennzeichnet, dass** die Befestigungskralle (6) mit einer Korrosionsschichtbeschichtung überzogen ist.

28. Bauteilverbindung nach einem der Ansprüche 1 bis 27, **dadurch gekennzeichnet, dass** die Befestigungskralle (6) mit einer elektrisch isolierenden Beschichtung überzogen ist.

29. Bauteilverbindung nach einem der Ansprüche 1 bis 23 oder 26 bis 28, **dadurch gekennzeichnet, dass** die Befestigungskralle (6) aus Kunststoff besteht.

30. Bauteilverbindung nach einem der Ansprüche 1 bis 29, **dadurch gekennzeichnet, dass** die Befestigungskralle (6) ein eigenständiges Element und nicht integraler Bestandteil einer anderen Komponente oder eines anderen Bauteils ist.

31. Bauteilverbindung nach einem der Ansprüche 1 bis 30, **dadurch gekennzeichnet, dass** die Bauteilverbindung ein zweites Bauteil (4) aufweist, welches ein Durchgangsloch (5) aufweist, wobei sich das männliche Fixierelement (2) durch das Durchgangsloch (5) hindurch erstreckt.

32. Bauteilverbindung nach Anspruch 31, **dadurch gekennzeichnet, dass** zumindest der Kreisringabschnitt (7) und/oder die Schirmringabschnitte (13a-13f) in einem durchgangslochnahen Bereich des zweiten Bauteils (4) an dem zweiten Bauteil (4) anliegt oder anliegen und sich einem Abziehen des zweiten Bauteils (4) von dem ersten Bauteil (1) widersetzt oder widersetzen, wobei eine auf das zweite Bauteil (4) wirkende Abziehkraft F (F₁) in in Längsrichtung der zungenartigen Elemente wirkende Kräfte umgesetzt werden, die von dem zweiten, kugeligen oder kugelähnlichen Abschnitt (2b) des männlichen Fixierelements (2) abgestützt werden, wodurch sich eine der Abziehkraft (F₁) entgegenwirkende Selbsthemmung ergibt.

33. Bauteilverbindung nach einem der Ansprüche 1 bis 32, **dadurch gekennzeichnet, dass** das männliche Fixierelement (2) durch zwei miteinander verbundene, insbesondere miteinander verschweißte, Kugeln oder kugelige Elemente (2a, 2b) gebildet ist.

34. Bauteilverbindung nach einem der Ansprüche 1 bis 33, **dadurch gekennzeichnet, dass** das männliche Fixierelement (2) aus Metall, insbesondere aus Stahl, besteht.

35. Bauteilverbindung nach einem der Ansprüche 1 bis 34, **dadurch gekennzeichnet, dass** das männliche Fixierelement (2) mit dem ersten Bauteil (1) verschweißt ist.

## Claims

1. A component connection, with
• a first component (1),
• a male fixing element (2) which projects from the first component (1),
• a fastening claw (6) which is clipped onto the male fixing element (2), wherein the fastening claw (6) has an annulus portion (7) which has a radial inner side, from which at least two flexurally elastic, tongue-like elements (8a, 8b, 8a', 8b') project obliquely inwards and upwards in the direction of an upper side of the fastening claw (6), wherein the tongue-like elements (8a, 8b, 8a', 8b') have free ends (8c, 8d) which define a middle, open region (14) of the fastening claw (6) into which the fixing element (2) is introduced from an underside of the fastening claw (6) and is clamped between the free ends (8c, 8d) of the tongue-like elements (8a, 8b, 8a', 8b'),
**characterised in that**
• the male fixing element (2) has a first spherical or sphere-like portion (2a) which is connected directly to the first component (1) and a second spherical or sphere-like portion (2b) adjoining the first portion (2a), wherein
• the free ends (8c, 8d) of the tongue-like elements (8a; 8b, 8a'; 8b') in a region between an upper side of the first component (1) and an equatorial plane (10) of the second portion (2b) lie obliquely from below and externally against the second portion (2b).

2. A component connection according to Claim 1, **characterised in that** the tongue-like elements (8a, 8b, 8a', 8b') are separated from each other by slots (12) extending substantially radially inwards from the annulus portion (7).

3. A component connection according to Claim 2, **characterised in that** radially outer ends of the slots (12) provided between the tongue-like elements (8a, 8b, 8a', 8b') are curved.

4. A component connection according to one of Claims 1 to 3, **characterised in that** the tongue-like elements (8a, 8b, 8a', 8b') taper towards their free ends (8c, 8d).

5. A component connection according to Claim 4, **characterised in that** the free ends (8c, 8d) are rounded.

6. A component connection according to Claim 4, **characterised in that** the free ends (8c, 8d) are designed to be straight and extend tangentially relative to the middle, open region (14) of the fastening claw (6).

7. A component connection according to Claim 4, **characterised in that** the free ends (8c, 8d) are formed to be concave, so that they can conform to a round fixing element (2).

8. A component connection according to one of Claims 1 to 7, **characterised in that** the tongue-like elements (8a, 8b, 8a', 8b') project at an angle (α) from a plane (11) formed by the annulus portion (7) which lies in a range between 10° and 40°.

9. A component connection according to Claim 8, **characterised in that** the angle (α) lies in a range between 20° and 30°.

10. A component connection according to one of Claims 8 or 9, **characterised in that** the angle (α) is greater than 28°.

11. A component connection according to one of Claims 1 to 10, **characterised in that** the tongue-like elements (8a, 8b, 8a', 8b') are arranged uniformly distributed in the peripheral direction of the annulus portion (7).

12. A component connection according to one of Claims 1 to 11, **characterised in that** the tongue-like elements (8a, 8b, 8a', 8b') are configured identically.

13. A component connection according to one of Claims 1 to 12, **characterised in that** precisely two tongue-like elements (8a, 8b) are provided.

14. A component connection according to one of Claims 1 to 12, **characterised in that** precisely three tongue-like elements (8a, 8b, 8a') are provided.

15. A component connection according to one of Claims 1 to 12, **characterised in that** precisely four tongue-like elements (8a, 8b, 8a', 8b') are provided.

16. A component connection according to one of Claims 1 to 15, **characterised in that** the fastening claw is produced from metal, especially from steel.

17. A component connection according to one of Claims 1 to 16, **characterised in that** the annulus portion (7) is flat.

18. A component connection according to one of Claims 1 to 17, **characterised in that** a plurality of shield ring portions (13a - 13f) arranged distributed in the peripheral direction of the annulus portion (7) project radially outwards from the annulus portion (7).

19. A component connection according to Claim 18, **characterised in that** two shield ring portions (13a - 13f) which succeed one another in the peripheral direction are separated from each other in each case by a shield ring slot (14a - 14f) extending in the radial direction.

20. A component connection according to one of Claims 18 or 19, **characterised in that** radially inner ends of the shield ring slots (14a - 14f) are curved.

21. A component connection according to one of Claims 19 or 20, **characterised in that** the shield ring slots (14a - 14f) in the peripheral direction are offset relative to the slots (12) provided between the tongue-like elements (8a, 8b, 8a', 8b').

22. A component connection according to one of Claims 18 to 21, **characterised in that** the shield ring portions (13a - 13f) project obliquely downwards from the annulus portion (7).

23. A component connection according to one of Claims 18 to 22, **characterised in that** the number of the shield ring portions (13a - 13f) is equal to or greater than the number of the tongue-like elements (8a, 8b, 8a', 8b').

24. A component connection according to one of Claims 1 to 23, **characterised in that** the fastening claw (6) is punched from a metal sheet, the tongue-like elements (8a, 8b, 8a', 8b') being bent upwards.

25. A component connection according to one of Claims 1 to 24, **characterised in that** the fastening claw (6) is case-hardened.

26. A component connection according to one of Claims 1 to 25, **characterised in that** the fastening claw is covered with a coating material.

27. A component connection according to one of Claims 1 to 26, **characterised in that** the fastening claw (6) is covered with a corrosion layer coating.

28. A component connection according to one of Claims 1 to 27, **characterised in that** the fastening claw (6) is covered with an electrically insulating coating.

29. A component connection according to one of Claims 1 to 23 or 26 to 28, **characterised in that** the fastening claw (6) comprises plastics material.

30. A component connection according to one of Claims 1 to 29, **characterised in that** the fastening claw (6) is a standalone element and not an integral part of another component part or another component.

31. A component connection according to one of Claims 1 to 30, **characterised in that** the component connection has a second component (4) which has a through-hole (5), with the male fixing element (2) extending through the through-hole (5).

32. A component connection according to Claim 31, **characterised in that** at least the annulus portion (7) and/or the shield ring portions (13a - 13f), in a region of the second component (4) which is closed to the through-hole, lies or lie against the second component (4) and opposes or oppose pulling-off of the second component (4) from the first component (1), with a pull-off force F (F₁) acting on the second component (4) being converted into forces acting in the longitudinal direction of the tongue-like elements, which are supported by the second, spherical or sphere-like portion (2b) of the male fixing element (2), as a result of which a self-locking which counteracts the pull-off force (F₁) is yielded.

33. A component connection according to one of Claims 1 to 32, **characterised in that** the male fixing element (2) is formed by two spheres or spherical elements (2a, 2b) connected together, especially welded together.

34. A component connection according to one of Claims 1 to 33, **characterised in that** the male fixing element (2) comprises of metal, especially of steel.

35. A component connection according to one of Claims 1 to 34, **characterised in that** the male fixing element (2) is welded to the first component (1).

## Revendications

1. Système de liaison de pièces comprenant :
• une première pièce (1),
• un élément de fixation mâle (2) qui dépasse de la première pièce (1),
• une griffe de fixation (6) qui est clipsée sur l'élément de fixation mâle (2), la griffe de fixation (6) comprenant un segment de bague circulaire (7) qui comporte une face interne radiale dont dépassant au moins deux éléments élastiques en flexion en forme de languettes (8a, 8b, 8a', 8b') s'étendant obliquement vers l'intérieur et vers le haut en direction de la face supérieure de la grille de fixation (6), les éléments en forme de languettes (8a, 8b, 8a', 8b') ayant des extrémités libres (8c, 8d) qui définissent une zone médiane ouverte (14) de la griffe de fixation (6) dans laquelle l'élément de fixation (2) est introduit par la face inférieure de la griffe de fixation (6), et est bloqué entre les extrémités libres (8c, 8d) des éléments en forme de languettes (8a, 8b, 8a', 8b'), **caractérisé en ce que**
• l'élément de fixation mâle (2) comporte un premier segment (2a) sphérique ou sphéroïdal directement relié à la première pièce (1) et un second segment sphérique ou sphéroïdal (2b) se connectant au premier segment (2a), et
• les extrémités libres (8c, 8d) des éléments en forme de languettes (8a, 8b, 8a', 8b') s'appliquant obliquement par le bas et l'extérieur sur le second segment (2b) dans une zone située entre la face supérieure de la première pièce (1) et le plan équatorial (10) du second segment (2b).

2. Système de liaison de pièces conforme à la revendication 1,
**caractérisé en ce que**
les éléments en forme de languettes (8a, 8b, 8a', 8b') sont séparés les uns des autres par des fentes (12) s'étendant essentiellement radialement vers l'intérieur à partir du segment de bague circulaire (7).

3. Système de liaison de pièces conforme à la revendication 2,
**caractérisé en ce que**
les extrémités radiales externes des fentes (12) situées entre les éléments en forme de languettes (8a, 8b, 8a', 8b') sont arrondies.

4. Système de liaison de pièces conforme à l'une des revendications 1 à 3,
**caractérisé en ce que**
les éléments en forme de languettes (8a, 8b, 8a', 8b') s'amincissent vers leur extrémité libre (8c, 8d).

5. Système de liaison de pièces conforme à la revendication 4,
**caractérisé en ce que**
les extrémités libres (8c, 8d) sont arrondies.

6. Système de liaison de pièces conforme à la revendication 4,
**caractérisé en ce que**
les extrémités libres (8c, 8d) sont linéaires et s'étendent tangentiellement par rapport à la zone médiane ouverte (14) de la griffe de fixation (6).

7. Système de liaison de pièces conforme à la revendication 4,
**caractérisé en ce que**
les extrémités libres (8c, 8d) sont concaves de sorte qu'elles puissent se conformer à un élément de fixation (2) arrondi.

8. Système de liaison de pièces conforme à l'une des revendications 1 à 7,
**caractérisé en ce que**
les éléments en forme de languettes (8a, 8b, 8a', 8b') s'écartent selon un angle (α) est situé dans une plage comprise entre 10° et 40° du plan (11) défini par le segment de bague circulaire (7).

9. Système de liaison de pièces conforme à la revendication 8,
**caractérisé en ce que**
l'angle (α) est situé dans une plage comprise entre 20° et 30°.

10. Système de liaison de pièces conforme à l'une des revendications 8 et 9,
**caractérisé en ce que**
l'angle (α) est supérieur à 28°.

11. Système de liaison de pièces conforme à l'une des revendications 1 à 10,
**caractérisé en ce que**
les éléments en forme de languettes (8a, 8b, 8a', 8b') sont uniformément répartis dans la direction périphérique du segment de bague circulaire (7).

12. Système de liaison de pièces conforme à l'une des revendications 1 à 11,
**caractérisé en ce que**
les éléments en forme de languettes (8a, 8b, 8a', 8b') sont identiques.

13. Système de liaison de pièces conforme à l'une des revendications 1 à 12,
**caractérisé en ce qu'**
il est prévu exactement deux éléments en forme de languettes (8a, 8b).

14. Système de liaison de pièces conforme à l'une des revendications 1 à 12,
**caractérisé en ce qu'**
il est prévu exactement trois éléments en forme de languettes (8a, 8b, 8a').

15. Système de liaison de pièces conforme à l'une des revendications 1 à 12,
**caractérisé en ce qu'**
il est prévu exactement quatre éléments en forme de languettes (8a, 8b, 8a', 8b').

16. Système de liaison de pièces conforme à l'une des revendications 1 à 15,
**caractérisé en ce que**
la griffe de fixation est réalisée en métal, en particulier en acier.

17. Système de liaison de pièces conforme à l'une des revendications 1 à 16,
**caractérisé en ce que**
le segment de bague circulaire (7) est plan.

18. Système de liaison de pièces conforme à l'une des revendications 1 à 17,
**caractérisé en ce que**
plusieurs segments de bague de protection (13a-13f) répartis dans la direction périphérique du segment de bague circulaire (7) dépassent radialement vers l'extérieur du segment de bague circulaire (7).

19. Système de liaison de pièces conforme à la revendication 18,
**caractérisé en ce que**
deux segments de bague de protection (13a-13f) successifs dans la direction périphérique sont respectivement séparés les uns des autres par une fente de bague de protection (14a-14f) s'étendant en direction radiale.

20. Système de liaison de pièces conforme à l'une des revendications 18 et 19,
**caractérisé en ce que**
les extrémités radiales internes des fentes des bagues de protection (14a-14f) sont arrondies.

21. Système de liaison de pièces conforme à l'une des revendications 19 et 20,
**caractérisé en ce que**
les fentes des bagues de protection (14a-14f) sont décalées en direction périphérique par rapport aux fentes (12) prévues entre les éléments en forme de languettes (8a, 8b, 8a', 8b').

22. Système de liaison de pièces conforme à l'une des revendications 18 à 21,
**caractérisé en ce que**
les segments de bague de protection (13a-13f) dépassent obliquement vers le bas du segment de bague circulaire (7).

23. Système de liaison de pièces conforme à l'une des revendications 18 à 22,
**caractérisé en ce que**
le nombre de segments de bague de protection (13a-13f) est égal ou similaire au nombre d'éléments en forme de languettes (8a, 8b, 8a', 8b').

24. Système de liaison de pièces conforme à l'une des revendications 1 à 23,
**caractérisé en ce que**
la griffe de fixation (6) est estampée à partir d'une tôle métallique, les éléments en forme de languettes (8a, 8b, 8a', 8b') étant recourbés.

25. Système de liaison de pièces conforme à l'une des revendications 1 à 24,
**caractérisé en ce que**
la griffe de fixation (6) est cémentée et trempée.

26. Système de liaison de pièces conforme à l'une des revendications 1 à 25,
**caractérisé en ce que**
la griffe de fixation est recouverte par un matériau de revêtement.

27. Système de liaison de pièces conforme à l'une des revendications 1 à 26,
**caractérisé en ce que**
la griffe de fixation (6) est recouverte par un revêtement constitué par une couche anticorrosion.

28. Système de liaison de pièces conforme à l'une des revendications 1 à 27,
**caractérisé en ce que**
la griffe de fixation (6) est recouverte par un revêtement électriquement isolant.

29. Système de liaison de pièces conforme à l'une des revendications 1 à 23 ou 26 à 28,
**caractérisé en ce que**
la griffe de fixation (6) est en matériau synthétique.

30. Système de liaison de pièces conforme à l'une des revendications 1 à 29,
**caractérisé en ce que**
la griffe de fixation (6) est un élément autonome et ne constitue pas une partie intégrante d'un autre composant ou d'une autre pièce.

31. Système de liaison de pièces conforme à l'une des revendications 1 à 30,
**caractérisé en ce qu'**
il comporte une seconde pièce (4) qui comporte un perçage traversant (5), l'élément de fixation mâle (2) s'étendant au travers du perçage traversant (5).

32. Système de liaison de pièces conforme à la revendication 31,
**caractérisé en ce qu'**
au moins le segment de bague circulaire (7) et/ou les segments de bague de protection (13a-13f) s'applique(nt) sur la seconde pièce (4) dans une zone proche du perçage traversant de cette seconde pièce (4), et s'oppose(nt) à un retrait de la seconde pièce (4) de la première pièce (1), une force d'extraction F (F₁) agissant sur la seconde pièce (4) étant transformée en des forces agissant dans la direction longitudinale des éléments en forme de languettes supportées par le second segment sphérique ou sphéroïdal (2b) de l'élément de fixation mâle (2), de façon à obtenir ainsi un autoblocage agissant contre la force d'extraction (F₁).

33. Système de liaison de pièces conforme à l'une des revendications 1 à 32,
**caractérisé en ce que**
l'élément de fixation mâle (2) est formé par deux éléments sphériques ou sphéroïdaux (2a, 2b) liés entre eux, en particulier soudés l'un à l'autre.

34. Système de liaison de pièces conforme à l'une des revendications 1 à 33,
**caractérisé en ce que**
l'élément de fixation mâle (2) est réalisé en métal, en particulier en acier.

35. Système de fixation de pièces conforme à l'une des revendications 1 à 34,
**caractérisé en ce que**
l'élément de fixation mâle (2) est soudé à la première pièce (1).
